# EUROPEAN PATENT APPLICATION

(11) **EP 4 510 419 A1**
(43) Date of publication of application: **19.02.2025**
(21) Application number: 24182237.8
(22) Date of filing: 14.06.2024
(51) Int. Cl.: H02J 7/00, H02J 9/06, H02M 1/00, H02M 3/07

(54) **CHIP, TERMINAL DEVICE, AND SYSTEM POWER SUPPLY METHOD**

(30) Priority: 17.08.2023 CN 202311048623
(71) Applicant: Huawei Technologies Co., Ltd., Shenzhen, Guangdong 518129 (CN)
(72) Inventor: HUANG, Qiwei, Shenzhen, 518129 (CN); ZHANG, Xiaocheng, Shenzhen, 518129 (CN); JIA, Ligang, Shenzhen, 518129 (CN)
(74) Representative: Epping - Hermann - Fischer

(57) **Abstract**

Embodiments of this application provide a chip, a terminal device, and a system power supply method. The chip includes a first switch transistor, a first comparator, a voltage sampling circuit, a control circuit, a switched capacitor circuit, and a buck circuit. The first switch transistor is connected to an input source and the switched capacitor circuit, the switched capacitor circuit is connected to a battery, and the buck circuit is connected to the first switch transistor and a system. The voltage sampling circuit is connected to the system, and the first comparator is connected to the voltage sampling circuit, a reference voltage, and the control circuit. The first comparator is configured to output a level of the first comparator in response to a result of comparison between a collected voltage of the system and the reference voltage. The control circuit is configured to: in response to the level of the first comparator, switch off the first switch transistor, control the switched capacitor circuit to boost a discharge voltage of the battery, and control the buck circuit to further convert the discharge voltage into a target voltage, so that the battery at a low voltage supplies power to the system Because in the technical solution of this application, an additional battery power supply path is not required, chip space and hardware costs can be reduced.

## Description

### TECHNICAL FIELD

This application relates to the field of charging technologies, and in particular, to a chip, a terminal device, and a system power supply method.

### BACKGROUND

Currently, a discharge voltage of a lithium battery made of a graphite anode material is sufficient for normal operation of a system of a terminal device such as a mobile phone. However, the lithium battery made of the graphite anode material has a small remaining electricity amount when the discharge voltage is 3.2 V In comparison, when battery volumes are the same, a lithium battery made of a silicon anode material has a larger battery capacity, and the silicon anode battery has a larger remaining electricity amount in a low-voltage state. However, a low-voltage charging and discharging technology of the silicon anode battery is not mature at present, and the battery in the low-voltage state cannot be directly used to supply power to a system.

Therefore, how to control a battery to supply power to a system in a low-voltage state is an urgent problem to be resolved at present.

### SUMMARY

Embodiments of this application provide a chip, a terminal device, and a system power supply method, to resolve a problem that a battery in a low-voltage state cannot be directly used to supply power to a system.

According to a first aspect, this design provides a chip. The chip includes a first switch transistor, a first comparator, a voltage sampling circuit, a control circuit, a switched capacitor circuit, and a buck circuit.

A first end of the first switch transistor is configured to connect to an input source. A first end of the switched capacitor circuit is connected to a second end of the first switch transistor, a second end of the switched capacitor circuit is connected to a battery, a first end of the buck circuit is connected to the second end of the first switch transistor, and a second end of the buck circuit is connected to a system. A first end of the voltage sampling circuit is connected to the system, a second end of the voltage sampling circuit is connected to a first input end of the first comparator, a second input end of the first comparator is configured to input to a reference voltage, an output end of the first comparator is connected to the control circuit, and an output end of the control circuit is separately connected to a control end of the first switch transistor, a control end of the switched capacitor circuit, and a control end of the buck circuit.

The voltage sampling circuit is configured to collect a voltage of the system.

The first comparator is configured to output a level of the first comparator in response to a result of comparison between the voltage of the system and the reference voltage.

It should be noted that, if a loading capability of the input source cannot support a current requirement of the system, the voltage of the system drops to a voltage threshold, for example, drops to 3.1 V Therefore, it may be determined, in a voltage comparison manner, that the loading capability of the input source cannot support the current requirement the system, and a system power supply manner is further switched by using the control circuit.

The control circuit is configured to switch off the first switch transistor in response to the level of the first comparator, so that the input source stops supplying power to the battery and the system. In addition, the control circuit is further configured to: in response to the level of the first comparator, control the switched capacitor circuit to boost a discharge voltage of the battery to a first voltage, and control the buck circuit to convert the first voltage into a target voltage, so that the battery supplies power to the system.

It should be noted that a switched capacitor circuit such as a Dickson charge pump is configured in a conventional charging chip. A boost function of the charge pump is usually used in a scenario in which a mobile phone charges a mobile phone. For example, a voltage of a battery of the mobile phone is boosted by using the charge pump, and the battery discharges by using the charge pump, and charges another mobile phone through a universal serial bus (Universal Serial Bus, USB) interface.

Based on this technical solution, when a loading capability of the input source is insufficient, a power supply voltage of the system drops to a voltage threshold, and the control circuit controls the input source to stop inputting, and controls to turn on or off the switch transistor in the switched capacitor circuit, to boost the discharge voltage of the battery. Further, the buck circuit in the chip reduces a boosted discharge voltage, and outputs the target voltage to supply power to the system.

Because a control circuit can control voltage boosting and discharging of the battery by reusing the switched capacitor circuit in the chip, no additional power supply path needs to be set to boost the discharge voltage of the battery, and a problem that the battery at a low voltage cannot continuously supply power to the system when the input source supplies insufficient power can be resolved.

In addition, in this design, because no additional power supply path needs to be set, chip space occupied by a peripheral component and hardware costs are further reduced.

In a possible design, the chip further includes a second switch transistor, the second switch transistor is connected between the second end of the buck circuit and the battery, and a control end of the second switch transistor is connected to the output end of the control circuit.

The control circuit is further configured to switch off the second switch transistor in response to the level of the first comparator.

It may be understood that, in a slow charging mode, the control circuit controls the buck circuit to reduce a voltage of the input source, and outputs a reduced voltage of the input source to the system. In addition, because the second switch transistor is in an on state, the control circuit further outputs the reduced voltage of the input source to the battery to charge the battery.

In this case, if a loading capability of the input source is insufficient, the control circuit is triggered to switch a state of independent loading of the input source to a state of independent loading of the battery. Therefore, in this design, when the loading capability of the input source is insufficient, the control circuit turns off the second switch transistor, to avoid a case in which the second switch transistor short-circuits the switched capacitor circuit. In this way, the battery can output a voltage to the switched capacitor circuit.

In a possible design, the chip further includes a first current sampling circuit, a second comparator, and a high-high level filter.

An input end of the first current sampling circuit is connected to the system, an output end of the first current sampling circuit is connected to a first input end of the second comparator, a second input end of the second comparator is configured to input to a first reference current, and an output end of the second comparator is connected to the control circuit.

The first current sampling circuit is configured to collect a current of the system.

The second comparator is configured to output a level of the second comparator in response to a result of comparison between the current of the system and the first reference current.

It should be noted that, in a process in which the battery supplies power to the system, load pressure is alleviated, and the current of the system is gradually reduced. Therefore, a current requirement of the system may be inferred by monitoring a change of the current of the system and comparing the current of the system with the preset first reference current.

The high level filter is configured to output an indication signal in response to that duration of receiving the level of the second comparator exceeds preset duration, where the indication signal indicates that the current of the system is within a preset range.

It may be understood that, to accurately infer a current requirement of the system, in this design, it not only needs to determine that the current of the system is small, but also needs to determine that a state in which the current of the system is small is stable, to avoid a misjudgment caused by an unstable current of the system.

Based on the technical solution of this design, when the battery supplies power, in this design, it is determined, by comparing the current of the system with the preset reference current, whether the current of the system is reduced to a normal range. Further, in this design, it is determined, through duration comparison, that the current of the system is stable and within the normal range of the current of the system.

If the current of the system is within the normal range and is continuously stable, it indicates that the input source may be used to supply power to the system. Therefore, the control circuit may control the battery to stop supplying power to the system, and control the input source to independently load, to avoid a waste of a battery electricity amount and reduce a quantity of battery cycles.

In a possible design, the chip further includes a protocol circuit, and the protocol circuit is connected to the control circuit.

The protocol circuit is configured to: establish a communication connection to the input source based on a preset charging protocol, and output a fast charging mode signal or a slow charging mode signal.

The control circuit is configured to: in response to the indication signal and the fast charging mode signal, stop responding to the level of the first comparator, turn on the first switch transistor, switch off the second switch transistor, control the switched capacitor circuit to reduce a voltage of the input source to a second voltage, and control the buck circuit to reduce the voltage of the input source to the target voltage; or in response to the indication signal and the slow charging mode signal, stop responding to the level of the first comparator, turn on the first switch transistor and the second switch transistor, and control the buck circuit to convert a voltage of the input source into the target voltage. For example, the input source is connected to a terminal device via a power adapter to supply power, and a protocol circuit in a chip of the terminal device performs handshake with the power adapter based on the preset charging protocol, and selects a corresponding charging mode.

For example, if the power adapter is of a fast charging type, based on the fast charging mode signal and the indication signal, the control circuit controls the buck circuit to reduce an input voltage of the input source and then supply power to the system, and controls the switched capacitor circuit to reduce the input voltage of the input source and then supply power to the battery.

If the power adapter is of a slow charging type, the control circuit controls, based on the slow charging mode signal and the indication signal, the buck circuit to reduce an input voltage of the input source and then supply power to the system and the battery.

Based on the technical solution of this design, when the current of the system is within a normal range and is continuously stable, the control circuit controls the battery to stop supplying power to the system, and selects a corresponding charging path with reference to a mode signal output by the protocol circuit, to charge the battery by using the input source. In this way, battery power supply is exited and system power supply is accurately restored, thereby saving a battery electricity amount and reducing a quantity of charging and discharging cycles.

In addition, the control circuit may control the input source to independently load, to ensure continuity and economy of system power supply.

According to a second aspect, this design provides a chip. The chip includes a second current sampling circuit, a third comparator, a control circuit, a switched capacitor circuit, and a buck circuit.

A first end of the switched capacitor circuit is configured to connect to an input source, a second end of the switched capacitor circuit is connected to a battery, a first end of the buck circuit is connected to the first end of the switched capacitor circuit, and a second end of the buck circuit is connected to a system. A first end of the second current sampling circuit is connected to the first end of the switched capacitor circuit, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit.

The second current sampling circuit is configured to collect a current of the input source.

The third comparator is configured to output a level of the third comparator in response to a result of comparison between the current of the input source and the second reference current.

The control circuit is configured to: in response to the level of the third comparator, control the switched capacitor circuit to boost a discharge voltage of the battery to a first voltage, and control the buck circuit to convert the first voltage into a target voltage, so that the battery supplies power to the system.

It may be understood that, when there is no input source input, the battery independently supplies power to the system. Therefore, the control circuit may reuse a boost function of the switched capacitor circuit to boost the voltage of the battery, to supply power to the system.

When there is no input source input, a battery at a low voltage in a conventional architecture requires an additional power supply path to boost a discharge voltage of the battery, and then a buck circuit reduces the voltage to supply power to a system. In this technical solution, the control circuit controls to turn on or off the switch transistor in the switched capacitor circuit, and boosts the discharge voltage of the battery. Further, the buck circuit in the chip reduces a boosted discharge voltage, and outputs the target voltage to supply power to the system.

Therefore, no additional power supply path needs to be set to boost the discharge voltage of the battery, and a problem that the battery at a low voltage cannot continuously supply power to the system when the input source supplies insufficient power can be resolved.

In addition, in this design, because no additional power supply path needs to be set, chip space occupied by a peripheral component and hardware costs are further reduced.

In a possible design, the chip further includes a second switch transistor, the second switch transistor is connected between the second end of the buck circuit and the battery, and a control end of the second switch transistor is connected to the output end of the control circuit.

The control circuit is further configured to switch off the second switch transistor in response to the level of the third comparator.

It may be understood that, when there is no input source input, the battery should be controlled to independently supply power to the system. Because the second switch transistor is generally configured in a slow charging path, if the second switch transistor is not switched off, the second switch transistor short-circuits the switched capacitor circuit, and the battery directly supplies power to the system at the discharge voltage.

Therefore, when there is no input source input, the control circuit in this design needs to switch off the second switch transistor, to avoid a case in which the second switch transistor is turned on and short-circuits the switched capacitor circuit. In this way, the discharge voltage of the battery is boosted by reusing the switched capacitor circuit, and then the voltage is reduced by the buck circuit to supply power to the system.

According to a third aspect, this design provides a terminal device. The terminal device includes a battery, a system, and the chip according to any one of the first aspect or the second aspect, a battery interface of the chip is configured to connect to the battery, a power supply interface of the chip is configured to connect to the system, and a serial communication USB interface of the chip is configured to connect to an input source.

According to a fourth aspect, this design provides a system power supply method, applied to a chip. The chip includes a first switch transistor, a first comparator, a voltage sampling circuit, a control circuit, a switched capacitor circuit, and a buck circuit.

A first end of the first switch transistor is configured to connect to an input source. A first end of the switched capacitor circuit is connected to a second end of the first switch transistor, a second end of the switched capacitor circuit is connected to a battery, a first end of the buck circuit is connected to the second end of the first switch transistor, and a second end of the buck circuit is connected to a system. A first end of the voltage sampling circuit is connected to the system, a second end of the voltage sampling circuit is connected to a first input end of the first comparator, a second input end of the first comparator is configured to input to a reference voltage, an output end of the first comparator is connected to the control circuit, and an output end of the control circuit is separately connected to a control end of the first switch transistor, a control end of the switched capacitor circuit, and a control end of the buck circuit.

The method includes:
The voltage sampling circuit collects a voltage of the system.

The first comparator outputs a level of the first comparator in response to a result of comparison between the voltage of the system and the reference voltage.

The control circuit turns off the first switch transistor, controls the switched capacitor circuit to boost a discharge voltage of the battery to a first voltage, and controls the buck circuit to convert the first voltage into a target voltage, in response to the level of the first comparator, so that the battery supplies power to the system.

It should be noted that, in a conventional system power supply method, to resolve a problem that a loading capability of an input source is insufficient, an additional power supply path is usually set to boost a discharge voltage of a battery. In this way, the input source and the battery jointly load, to resolve a problem that the loading capability of the input source is insufficient and the battery at a low voltage cannot supply power to a system. In the technical solution of this application, when a loading capability of the input source is insufficient, a boost function of the switched capacitor circuit is reused to boost the discharge voltage of the battery. In this way, a problem that the battery at a low voltage cannot continuously supply power to the system when the input source supplies insufficient power is resolved.

Based on this technical solution, the control circuit can control voltage boosting and discharging of the battery by reusing the switched capacitor circuit in the chip, so that the battery at the low voltage supplies power to the system. Compared with the conventional power supply solution, in this design, no additional power supply path needs to be set in the chip, so that chip space and hardware costs are reduced. In addition, when the loading capability of the input source is insufficient, in the conventional power supply solution, independent loading of the input source is switched to joint loading of the input source and the battery. However, in the power supply solution of this design, independent loading of the input source is switched to independent loading of the battery, to improve stability of the power supply system.

In a possible design, the chip further includes a second switch transistor, the second switch transistor is connected between the second end of the buck circuit and the battery, and a control end of the second switch transistor is connected to the output end of the control circuit.

The method further includes:
The control circuit turns off the second switch transistor in response to the level of the first comparator.

It may be understood that, in a slow charging mode, the control circuit controls the buck circuit to reduce a voltage of the input source, and outputs a reduced voltage of the input source to the system. In addition, because the second switch transistor is in an on state, the control circuit further outputs the reduced voltage of the input source to the battery to charge the battery.

In this case, if a loading capability of the input source is insufficient, the control circuit is triggered to switch a state of independent loading of the input source to a state of independent loading of the battery. In this case, the second switch transistor should be switched off; otherwise, the second switch transistor short-circuits the switched capacitor circuit, and the battery directly supplies power to the system at the discharge voltage.

In a possible design, the chip further includes a first current sampling circuit, a second comparator, and a high-high level filter.

An input end of the first current sampling circuit is connected to the system, an output end of the first current sampling circuit is connected to a first input end of the second comparator, a second input end of the second comparator is configured to input to a first reference current, and an output end of the second comparator is connected to the control circuit.

After the control circuit turns off the first switch transistor, controls the switched capacitor circuit to boost the discharge voltage of the battery to the first voltage, and controls the buck circuit to convert the first voltage into the target voltage, in response to the level of the first comparator, so that the battery supplies power to the system, the method further includes:
The first current sampling circuit collects a current of the system.

The second comparator outputs a level of the second comparator in response to a result of comparison between a maximum current of the system and the first reference current.

The high level filter outputs an indication signal in response to that duration of receiving the level of the second comparator exceeds preset duration, where the indication signal indicates that the current of the system is within a preset range.

Based on the technical solution of this design, when the battery supplies power, it is determined, in a current comparison and duration determining manner, that the current of the system is restored to a normal range. Further, if the current of the system is within the normal range, it indicates that the input source may be used to supply power to the system. Therefore, the control circuit may control the battery to stop supplying power to the system, and control the input source to independently load, to avoid a waste of a battery electricity amount and reduce a quantity of battery cycles.

In a possible design, the chip further includes a protocol circuit, and the protocol circuit is connected to the control circuit.

The method further includes:
The protocol circuit establishes a communication connection to the input source based on a preset charging protocol, and outputs a fast charging mode signal or a slow charging mode signal.

After the high level filter outputs the indication signal in response to that the duration of receiving the level of the second comparator exceeds the preset duration, the method further includes:
In response to the indication signal and the fast charging mode signal, the control circuit stops responding to the level of the first comparator, turns on the first switch transistor, turns off the second switch transistor, controls the switched capacitor circuit to reduce a voltage of the input source to a second voltage, and controls the buck circuit to reduce the voltage of the input source to the target voltage; or in response to the indication signal and the slow charging mode signal, the control circuit stops responding to the level of the first comparator, turns on the first switch transistor and the second switch transistor, and controls the buck circuit to convert a voltage of the input source into the target voltage. For example, the input source supplies power to a terminal device via a power adapter, and the protocol circuit performs handshake with the power adapter based on the preset charging protocol, and selects a corresponding charging mode.

For example, if the power adapter is of a fast charging type, based on the fast charging mode signal and the indication signal, the control circuit controls the buck circuit to reduce an input voltage of the input source and then supply power to the system, and controls the switched capacitor circuit to reduce the input voltage of the input source and then supply power to the battery.

If the power adapter is of a slow charging type, the control circuit controls, based on the slow charging mode signal and the indication signal, the buck circuit to reduce an input voltage of the input source and then supply power to the system and the battery.

Based on the technical solution of this design, when the battery supplies power, in this design, it is determined, by comparing the current of the system with the preset reference current, whether the current of the system is reduced to a normal range. Further, in this design, it is determined, through duration comparison, that the current of the system is stable and within the normal range of the current of the system.

When the current of the system is within the normal range and is continuously stable, the control circuit controls the battery to stop supplying power to the system, and selects a corresponding charging path with reference to a mode signal output by the protocol circuit, to charge the battery by using the input source. In this way, independent loading of the input source is implemented, thereby ensuring continuity and economy of system power supply.

According to a fifth aspect, this design provides a system power supply method, applied to a chip. The chip includes a second current sampling circuit, a third comparator, a control circuit, a switched capacitor circuit, and a buck circuit. A first end of the switched capacitor circuit is configured to connect to an input source, a second end of the switched capacitor circuit is connected to a battery, a first end of the buck circuit is connected to the first end of the switched capacitor circuit, and a second end of the buck circuit is connected to a system. A first end of the second current sampling circuit is connected to the first end of the switched capacitor circuit, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit.

The method includes:
The second current sampling circuit collects a current of the input source.

The third comparator outputs a level of the third comparator in response to a result of comparison between the current of the input source and the second reference current.

In response to the level of the third comparator, the control circuit controls the switched capacitor circuit to boost a discharge voltage of the battery to a first voltage, and controls the buck circuit to convert the first voltage into a target voltage, so that the battery supplies power to the system.

It may be understood that, when there is no input source input, the battery independently supplies power to the system. Therefore, the control circuit may reuse a boost function of the switched capacitor circuit to boost the voltage of the battery, to supply power to the system.

When there is no input source input, a battery at a low voltage in a conventional architecture requires an additional power supply path to boost a discharge voltage of the battery, and then a buck circuit reduces the voltage to supply power to a system. In this technical solution, the control circuit controls to turn on or off the switch transistor in the switched capacitor circuit, and boosts the discharge voltage of the battery. Further, the buck circuit in the chip reduces a boosted discharge voltage, and outputs the target voltage to supply power to the system.

Therefore, no additional power supply path needs to be set to boost the discharge voltage of the battery, and a problem that the battery at a low voltage cannot continuously supply power to the system when the input source supplies insufficient power can be resolved.

In addition, in this design, because no additional power supply path needs to be set, chip space occupied by a peripheral component and hardware costs are further reduced.

In a possible design, the chip further includes a second switch transistor, the second switch transistor is connected between the second end of the buck circuit and the battery, and a control end of the second switch transistor is connected to the output end of the control circuit.

The control circuit turns off the second switch transistor in response to the level of the third comparator.

It may be understood that, when there is no input source input, the battery should be controlled to independently supply power to the system. Because the second switch transistor is generally configured in a slow charging path, if the second switch transistor is not switched off, the second switch transistor short-circuits the switched capacitor circuit, and the battery directly supplies power to the system at the discharge voltage.

Therefore, when there is no input source input, the control circuit in this design needs to switch off the second switch transistor, to avoid a case in which the second switch transistor is turned on and short-circuits the switched capacitor circuit, to control the switched capacitor circuit to boost the discharge voltage of the battery, and then the voltage is reduced by the buck circuit to supply power to the system.

### BRIEF DESCRIPTION OF DRAWINGS

FIG. 1 is a diagram of charging a terminal device;
FIG. 2a is a schematic of a fast charging path of a terminal device;
FIG. 2b is a schematic of a battery loading path of a terminal device;
FIG. 2c is a schematic of a slow charging path of a terminal device;
FIG. 3a is a schematic of a structure of a chip according to an embodiment of this application;
FIG. 3b is a schematic of a structure of another chip according to an embodiment of this application;
FIG. 4a is a schematic of a structure of another chip according to an embodiment of this application;
FIG. 4b is a schematic of a structure of another chip according to an embodiment of this application;
FIG. 5 is a schematic of a structure of another chip according to an embodiment of this application;
FIG. 6a is a schematic of a structure of another chip according to an embodiment of this application;
FIG. 6b is a schematic of a structure of another chip according to an embodiment of this application;
FIG. 7 is a schematic of a structure of a terminal device according to an embodiment of this application;
FIG. 8 is a schematic flowchart of a system power supply method according to an embodiment of this application;
FIG. 9 is a schematic flowchart of another system power supply method according to an embodiment of this application; and
FIG. 10 is a schematic flowchart of another system power supply method according to an embodiment of this application.

### DESCRIPTION OF EMBODIMENTS

To make objectives, technical solutions, and advantages of this application clearer, the following describes, with reference to an application background, a technical problem that needs to be resolved in this application.

Currently, considering that a silicon anode battery has a larger battery capacity in a low-voltage state, most manufacturers select a silicon anode material to make a lithium battery. Based on an experiment test, the silicon anode battery has an electricity amount about 8% between 3.2 V and 2.5 V However, a low-voltage charging and discharging technology of the silicon anode battery is not mature at present, and consequently, the silicon anode battery at a low voltage cannot directly supply power to a system.

For example, a discharge voltage of the silicon anode battery at the low voltage is 2.5 V, and a power supply voltage required by the system is not allowed to drop below 3.1 V As a result, the battery cannot meet a power supply requirement of the system without adding a power supply path.

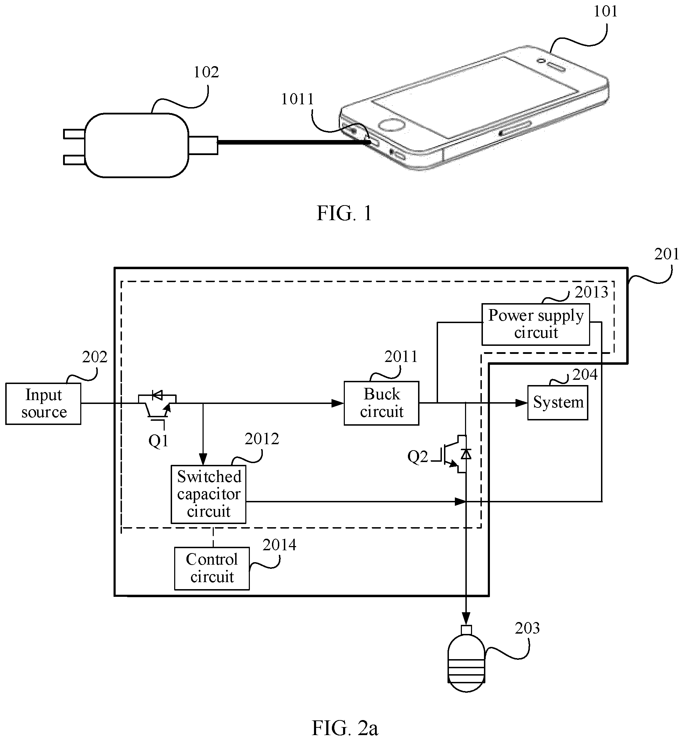

As shown in FIG. 1, a USB interface 1011 of a terminal device 101 may be connected to a power adapter 102, and the power adapter 102 may supply power to the terminal device 101 after being inserted into an input source.

It should be noted that the terminal device 101 may be a portable electronic product such as a mobile phone or an uncrewed aerial vehicle, and a battery of the terminal device 101 may be a single lithium battery or a plurality of lithium batteries.

For ease of understanding the technical solutions of this application, the following describes a conventional power supply solution for the terminal device.

First, after the input source is connected to the terminal device 101, the power adapter 102 and the terminal device 101 perform handshake based on a charging protocol, to determine a voltage standard and a current standard that are to be used. In this process, it may be determined that the terminal device 101 enters a fast charging mode or a slow charging mode. Further, a chip of the terminal device 101 selects, based on the fast charging mode or the slow charging mode, a charging path to charge the battery of the terminal device 101, and supplies power to a system.

In a process in which the terminal device 101 supplies power, if the system of the terminal device 101 is overloaded, a current requirement of the system increases. When the current requirement of the system increases to a specific extent, a loading capability of the input source is insufficient, and the chip switches from a working mode of independent loading of the input source to a working mode of joint loading of the input source and the battery, to meet a power supply requirement of the system.

For example, as shown in FIG. 2a to FIG. 2c, a chip 201 of a terminal device 101 includes a first switch transistor Q1, a second switch transistor Q2, a buck circuit 2011, a switched capacitor circuit 2012, a power supply circuit 2013, and a control circuit 2014 (where the control circuit 2014 is separately connected to control ends of the first switch transistor Q1, the second switch transistor Q2, the buck circuit 2011, the switched capacitor circuit 2012, and the power supply circuit 2013, and the control ends are not shown in FIG. 2a).

In a fast charging mode, the control circuit 2014 controls to turn on the first switch transistor Q1, and controls to switch off the second switch transistor Q2, and a voltage of an input source is reduced by a DC-DC converter, to meet a power supply requirement of a system power supply.

In addition, to adapt to high-current charging and reduce a loss caused by heat generated by a wire resistance and a battery internal resistance, most manufacturers use the switched capacitor circuit 2012 to support the fast charging mode. Therefore, the terminal device 101 shown in FIG. 2a further includes the switched capacitor circuit 2012. Further, the voltage of the input source is reduced by the buck circuit 2011 to charge a battery 203.

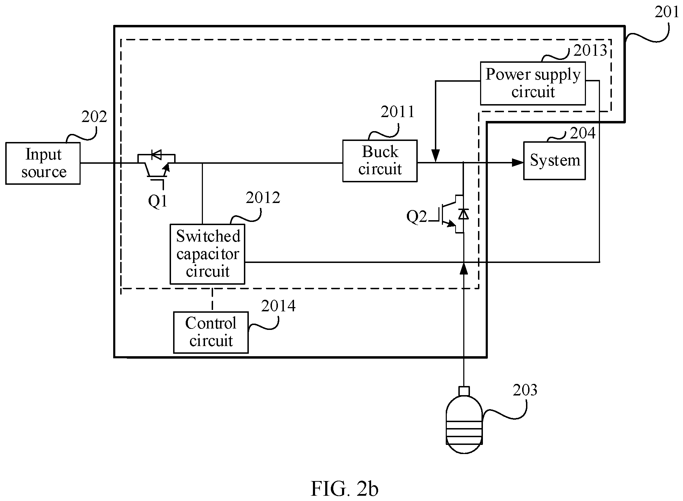

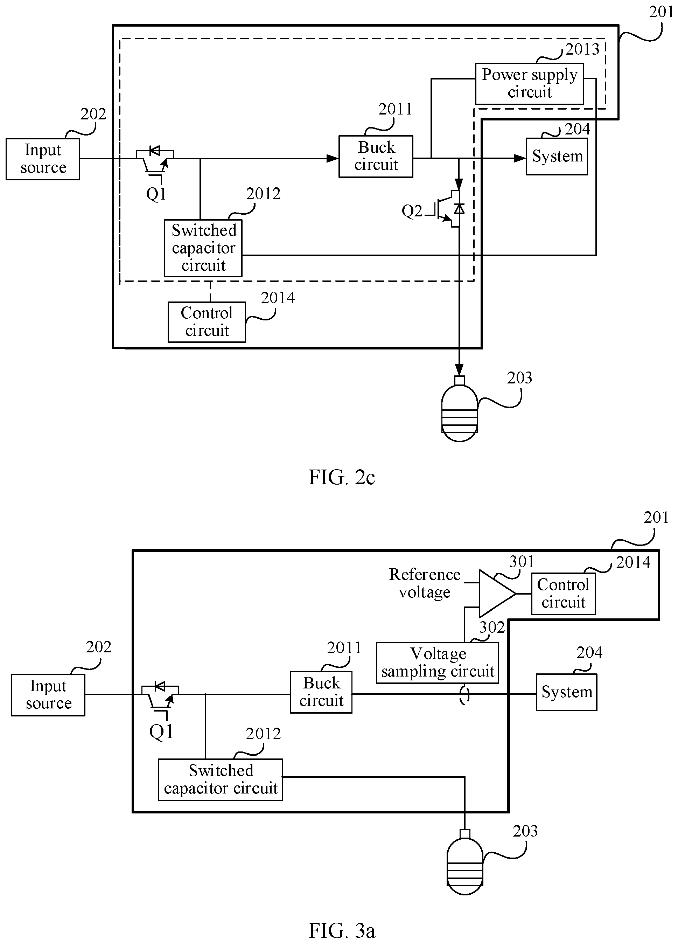

As shown in FIG. 2b, if in the fast charging mode, a current requirement of a system 204 increases and a loading capability of the input source 202 cannot support a power supply requirement of the system 204, a voltage of the system 204 drops to a preset voltage value. In this case, the control circuit 2014 maintains normal input of the input source 202, and controls the battery 203 to discharge, and a discharge voltage of the battery 203 is boosted by the power supply circuit 2013, so that the input source 202 and the battery 203 jointly supply power to the system 204. As shown in FIG. 2c, in a slow charging mode, the control circuit 2014 controls to turn on the switch transistor Q1 and the switch transistor Q2, and a voltage of an input source is reduced by a DC-DC converter to charge a system 204 and a battery 203.

As shown in FIG. 2b, if in the slow charging mode, a current requirement of the system 204 increases and a loading capability of the input source 202 cannot support a power supply requirement of the system 204, a voltage of the system drops to a preset voltage value. In this case, the voltage of the system 204 drops to the preset voltage value, the control circuit 2014 maintains normal input of the input source 202, and controls the battery 203 to discharge, and a discharge voltage of the battery 203 is boosted by the power supply circuit 2013, so that the input source 202 and the battery 203 jointly supply power to the system 204.

It can be learned from the foregoing descriptions that, when the loading capability of the input source 202 is insufficient, the additional power supply circuit 2013 is required for voltage boosting and discharging of the battery 203, to meet the power supply requirement of the system 204. As a result, an additional area and more peripheral components are required.

In addition, in a scenario in which the system 204 has no external input, the battery 203 independently supplies power to the system 204. As shown in FIG. 2b, the control circuit 2014 controls the battery 203 to discharge, and the discharge voltage of the battery 203 is boosted by the power supply circuit 2013, so that the battery 203 in a low-voltage state independently supplies power to the system 204.

Similarly, in this manner of supplying power to the system by the battery at a low voltage, an additional power supply path and more peripheral components are also required.

Based on the foregoing problem, embodiments of this application provide a chip, a terminal device, and a system power supply method, to resolve a problem of how to control a battery at a low voltage to supply power to a system.

An embodiment of this application provides a chip. As shown in FIG. 3a, the chip 201 includes a first switch transistor Q1, a first comparator 301, a voltage sampling circuit 302, a control circuit 2014, a switched capacitor circuit 2012, and a buck circuit 2011.

A first end of the first switch transistor Q1 is configured to connect to an input source 202. A first end of the switched capacitor circuit 2012 is connected to a second end of the first switch transistor Q1, a second end of the switched capacitor circuit 2012 is connected to a battery 203, a first end of the buck circuit 2011 is connected to the second end of the first switch transistor Q1, and a second end of the buck circuit 2011 is connected to a system 204. A first end of the voltage sampling circuit 302 is connected to the system 204, a second end of the voltage sampling circuit 302 is connected to a first input end of the first comparator 301, a second input end of the first comparator 301 is configured to input to a reference voltage, an output end of the first comparator 301 is connected to the control circuit 2014, and an output end of the control circuit 2014 is separately connected to a control end of the first switch transistor Q1, a control end of the switched capacitor circuit 2012, and a control end of the buck circuit 2011.

It should be noted that the switched capacitor circuit 2012 is a circuit including a plurality of capacitors and a plurality of switching elements, and is generally controlled by the control circuit to boost or reduce a voltage of the input source. For example, the control circuit controls to turn on or off the switching element in the switched capacitor circuit 2012, to charge or discharge the internal capacitor. Because the voltage of the input source is superposed with discharge voltages of the plurality of capacitors, the switched capacitor circuit 2012 may implement a boost function. Because a part of the voltage of the input source is allocated to the plurality of capacitors in a charging process, and after the input source stops inputting the voltage, only the capacitor outputs the voltage, the switched capacitor circuit 2012 may further implement a buck function.

It should be further noted that, the buck circuit 2011 is a circuit including an inductor, a free-wheeling diode, and a switching element, and the buck circuit 2011 is generally controlled by the control circuit to reduce the voltage of the input source.

For example, the control circuit controls to turn on or off the switching element of the buck circuit 2011, so that the input source charges the inductor for energy storage. Because a current on the inductor cannot change abruptly, the inductor stores some electric energy. Further, the control circuit controls to turn on or off the switching element of the buck circuit 2011, so that the input source stops inputting the voltage, and a free-wheeling loop where the inductor is located supplies power to load. Because control time of the control circuit is short, and the inductor stores a little energy, the buck function is implemented.

In addition, when a polarity of the inductor changes, the inductor cannot supply power to the load. Therefore, some buck circuits 2011 further include capacitors, and the capacitor may supply power to the load when the polarity of the inductor changes, to ensure continuity of power supply.

The voltage sampling circuit 302 is configured to collect a voltage of the system 204.

The first comparator 301 is configured to output a level of the first comparator in response to a result of comparison between the voltage of the system 204 and the reference voltage.

It should be noted that, if a loading capability of the input source 202 cannot support a current requirement of the system 204, the voltage of the system 204 drops to a voltage threshold. For example, the system 204 is overloaded, and the current requirement of the system 204 increases. As a result, the voltage of the system 204 drops to 3.1 V Therefore, it may be determined, in a voltage comparison manner, whether the loading capability of the input source 202 can support the current requirement of the system 204, and a system power supply manner is further switched by using the control circuit 2014.

The control circuit 2014 is configured to switch off the first switch transistor Q1 in response to the level of the first comparator, so that the input source 202 stops supplying power to the battery 203 and the system 204. In addition, the control circuit 2014 is further configured to: in response to the level of the first comparator, control the switched capacitor circuit 2012 to boost a discharge voltage of the battery 203 to a first voltage, and control the buck circuit 2011 to convert the first voltage into a target voltage, so that the battery 203 supplies power to the system 204.

It should be noted that a switched capacitor circuit 2012 such as a Dickson charge pump is configured in a conventional charging chip 201. A boost function of the charge pump is usually used in a scenario in which a mobile phone charges a mobile phone. For example, a voltage of a battery of the mobile phone is boosted by using the charge pump, and the battery discharges by using the charge pump, and charges another mobile phone through a universal serial bus (Universal Serial Bus, USB) interface.

Therefore, the control circuit 2014 in this application may reuse the boost function of the switched capacitor circuit 2012 to boost the discharge voltage of the battery 203, to meet a power supply requirement of the system 204.

For example, high voltage input of the input source 202 is 20 V, a charge or discharge voltage of the battery 203 is 5 V, a conversion ratio of the switched capacitor circuit 2012 is 4:1, and a conversion ratio of the buck circuit 2011 is 5: 1. After the USB interface obtains power, the USB interface indicates, based on a charging protocol, the control circuit 2014 to enter a fast charging mode, and the control circuit 2014 controls the switched capacitor circuit 2012 to reduce the voltage of 20 V to 5 V and charge the battery 203. In addition, the control circuit 2014 controls the buck circuit 2011 to reduce the voltage of 20 V to 4 V to supply power to the system 204.

In a process in which the input source 202 supplies power to the system 204 and the battery 203, the voltage of the system 204 is reduced because the load of the system 204 is large and the loading capability of the input source 202 is insufficient. The voltage collected by the voltage collection circuit 302 is 3.1 V Because the reference voltage input by the first comparator 301 is 3.2 V, the control circuit 2014 detects that the voltage of the system 204 drops to a preset threshold, and turns off the first switch transistor Q1 to cut off input of the input source 202. In addition, after controlling the switched capacitor circuit 2012 to boost the discharge voltage of the battery 203 from 5 V, the control circuit 2014 controls the buck circuit 2011 to further reduce the voltage to supply power to the system 204.

The switched capacitor circuit 2012 and the buck circuit 2011 in this embodiment have a plurality of implementations in the art. A person skilled in the art may make various modifications and variations to topology structures and control manners of the switched capacitor circuit 2012 and the buck circuit 2011 without departing from the technical concept of this application. For ease of understanding, the following describes this embodiment by using an example in which the switched capacitor circuit 2012 is a Dickson charge pump and the buck circuit 2011 is a buck circuit.

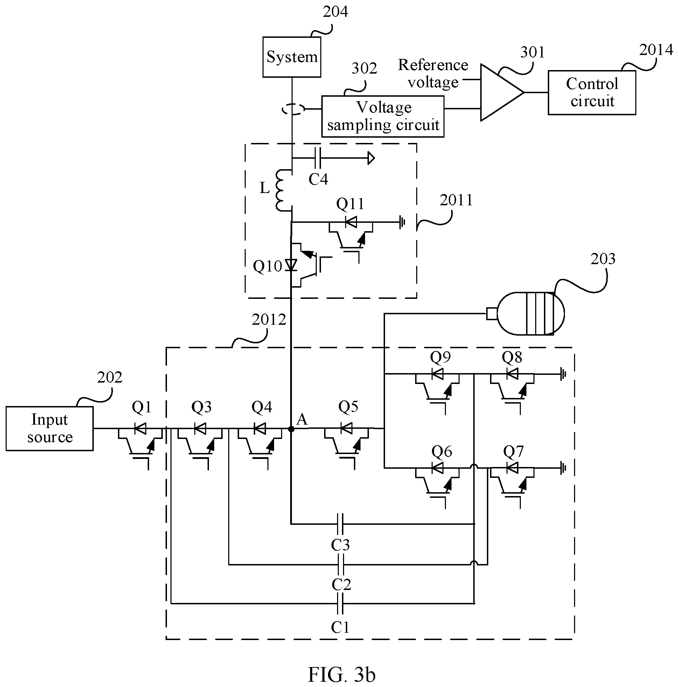

As shown in FIG. 3b, the Dickson charge pump includes switch transistors Q3 to Q9 and capacitors C 1 to C3, and the buck circuit includes a switch transistor Q10, a switch transistor Q11, an inductor L, and a capacitor C4.

In the process in which the input source 202 supplies power to the system 204 and the battery 203, the voltage of the system 204 is reduced because the load of the system 204 is large and the loading capability of the input source 202 is insufficient. A voltage collected by a voltage collection circuit 302 at an output end of the inductor L is 3.1 V Because the reference voltage input by the first comparator 301 is 3.2 V, the first comparator 301 outputs the level of the first comparator, and the level of the first comparator indicates that the voltage of the system 204 drops to the preset threshold.

The control circuit 2014 turns off the first switch transistor Q1 in response to the level of the first comparator, to cut off input of the input source 202. In addition, the control circuit 2014 controls to switch off the switch transistor Q3, the switch transistor Q4, and the switch transistor Q9 of the Dickson charge pump, and turn on the switch transistor Q5. In this case, the battery 203 charges the capacitor C3 at a discharge voltage of 5 V, and a voltage of a drain A of the switch transistor Q5 is 5 V

Further, the control circuit 2014 controls to turn on the switch transistor Q9 of the Dickson charge pump and switch off the switch transistor Q5. Because the capacitor C3 is equivalent to a power supply after being charged, it may be considered that a 5 V power supply and the battery are connected in series to discharge the drain A of the switch transistor Q5. When the power supply and the battery are superposed, the voltage of the drain A of the switch transistor Q5 is boosted to 10 V

In conclusion, the voltage of the drain A of the switch transistor Q5 jumps between 5 V and 10 V, to achieve an effect of boosting the discharge voltage of the battery 203. The control circuit 2014 controls the buck circuit to reduce a boosted discharge voltage of the battery, to supply power to the system 204.

Based on the technical solution of this application, no additional power supply path needs to be set in the chip, and the control circuit can control voltage boosting and discharging of the battery by reusing the switched capacitor circuit in the chip, so that the battery at a low voltage supplies power to the system. In addition, chip space and hardware costs are reduced.

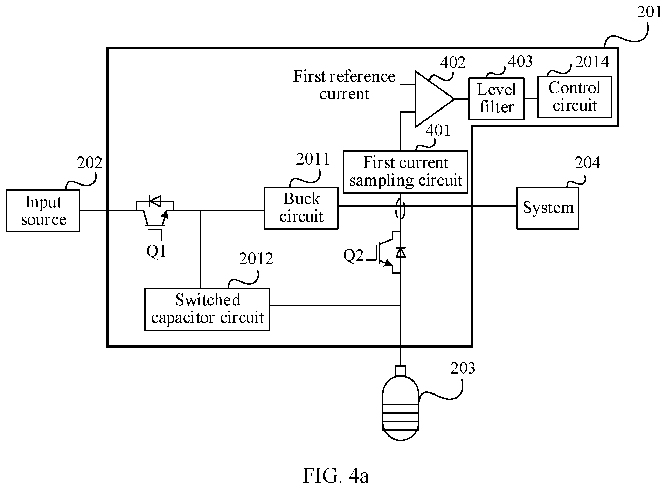

In a possible embodiment, based on a structure of the chip 201 shown in FIG. 3a, as shown in FIG. 4a, the chip 201 further includes a second switch transistor Q2, the second switch transistor Q2 is connected between the second end of the buck circuit 2011 and the battery 203, and a control end of the second switch transistor Q2 is connected to the output end of the control circuit 2014.

The control circuit 2014 is further configured to switch off the second switch transistor Q2 in response to the level of the first comparator.

It may be understood that, in a slow charging mode, the control circuit 2014 controls the buck circuit 2011 to reduce the voltage of the input source, and outputs a reduced voltage of the input source to the system 204. In addition, because the second switch transistor Q2 is in an on state, the control circuit 2014 further outputs the reduced voltage of the input source to the battery 203 to charge the battery 203.

In this case, if the loading capability of the input source 202 is insufficient, the control circuit 2014 is triggered to switch a state of independent loading of the input source 202 to a state of independent loading of the battery 203, and the second switch transistor Q2 should be switched off; otherwise, the second switch transistor Q2 short-circuits the switched capacitor circuit 2012, and the battery 203 directly supplies power to the system 204 at the discharge voltage. Therefore, in a process in which the control circuit 2014 controls voltage boosting and discharging of the battery to independently supply power to the system, the control circuit 2014 needs to switch off the second switch transistor Q2.

It may be understood that, in the process in which the control circuit 2014 controls voltage boosting and discharging of the battery to independently supply power to the system, in addition to switching off the second switch transistor Q2 by the control circuit 2014, for a control process of the control circuit 2014, refer to the descriptions in FIG. 3a. The switched capacitor circuit 2012 and the buck circuit 2011 in this embodiment have a plurality of implementations in the art. A person skilled in the art may make various modifications and variations to topology structures and control manners of the switched capacitor circuit 2012 and the buck circuit 2011 without departing from the technical concept of this application. For ease of understanding, the following describes this embodiment by using an example in which the switched capacitor circuit 2012 is a Dickson charge pump and the buck circuit 2011 is a buck circuit.

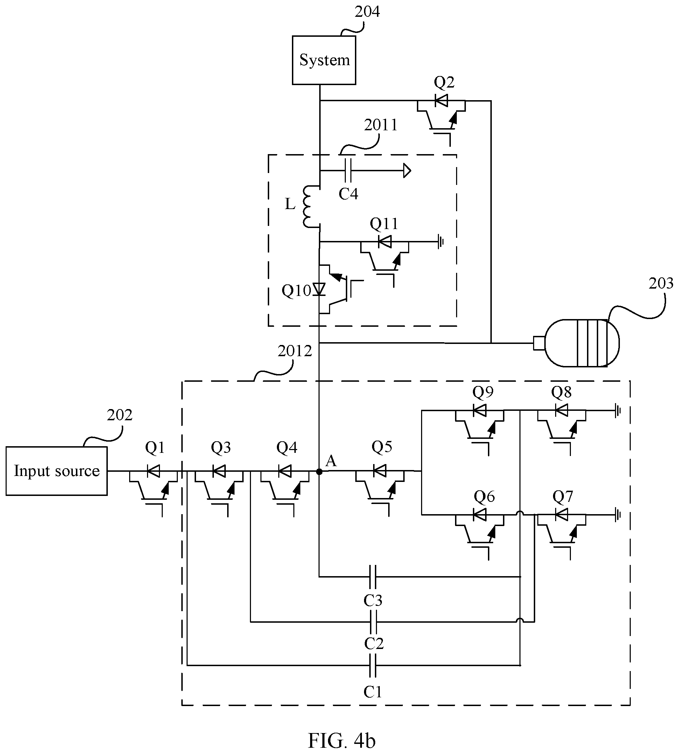

As shown in FIG. 4b, based on FIG. 3b, the chip 201 further includes a second switch transistor Q2.

In the process in which the input source 202 supplies power to the system 204 and the battery 203, the voltage of the system 204 is reduced because the load of the system 204 is large and the loading capability of the input source 202 is insufficient. The voltage collected by the voltage collection circuit 302 at the output end of the inductor L is 3.1 V Because the reference voltage input by the first comparator 301 is 3.2 V, the first comparator 301 outputs the level of the first comparator, and the level of the first comparator indicates that the voltage of the system 204 drops to the preset threshold.

The control circuit 2014 turns off the first switch transistor Q1 in response to the level of the first comparator, to cut off input of the input source 202, and turns off the second switch transistor Q2 to ensure that the Dickson charge pump is not short-circuited.

In addition, the control circuit 2014 controls to switch off the switch transistor Q3, the switch transistor Q4, and the switch transistor Q9 of the Dickson charge pump, and turn on the switch transistor Q5. In this case, the battery 203 charges the capacitor C3 at the discharge voltage of 5 V, and the voltage of the drain A of the switch transistor Q5 is 5 V

Further, the control circuit 2014 controls to turn on the switch transistor Q9 of the Dickson charge pump and switch off the switch transistor Q5. Because the capacitor C3 is equivalent to the power supply after being charged, it may be considered that the 5 V power supply and the battery are connected in series to discharge the drain A of the switch transistor Q5. When the power supply and the battery are superposed, the voltage of the drain A of the switch transistor Q5 is boosted to 10 V

In conclusion, the voltage of the drain A of the switch transistor Q5 jumps between 5 V and 10 V, to achieve the effect of boosting the discharge voltage of the battery 203. The control circuit 2014 controls the buck circuit to reduce the boosted discharge voltage of the battery, to supply power to the system 204.

In a possible embodiment, as shown in FIG. 4a, the chip 201 further includes a first current sampling circuit 401, a second comparator 402, and a high-high level filter 403 (where for ease of observation, the first comparator 301 and the voltage collection circuit 302 are not shown).

An input end of the first current sampling circuit 401 is connected to the system 204, an output end of the first current sampling circuit 401 is connected to a first input end of the second comparator 402, a second input end of the second comparator 402 is configured to input to a first reference current, and an output end of the second comparator 402 is connected to the control circuit 2014.

The first current sampling circuit 401 is configured to collect a current of the system 204.

The second comparator 402 is configured to output a level of the second comparator in response to a result of comparison between the current of the system 204 and the first reference current.

It should be noted that, in a process in which the battery 203 supplies power to the system 204, the power supply requirement of the system 204 is met, and the current of the system 204 is gradually reduced. Therefore, the current of the system 204 may be compared with the preset first reference current, to infer whether the current of the system 204 is restored to a normal range.

The high level filter 403 is configured to output an indication signal in response to that duration of receiving the level of the second comparator exceeds preset duration, where the indication signal indicates that the current of the system 204 is within a preset range.

It may be understood that, because the current of the system 204 may be unstable, a duration limit needs to be added, to ensure that the current of the system 204 is continuously less than the first reference current within the preset duration, so that the control circuit 2014 can switch from a power supply manner of independent loading of the battery to another system power supply manner.

For example, the preset duration is 1 s, and the first reference current is 800 mA. In a process in which the battery 203 reuses the switched capacitor circuit to supply power to the system 204, the load of the system 204 is large. If a required current of the system 204 is reduced, and the current of the system collected by the first current sampling circuit 401 is 700 mA and lasts for more than 1s, it indicates that the loading capability of the input source 202 can support a present requirement of the system 204. Therefore, the control circuit 2014 may further switch a system power supply manner from independent loading of the battery to loading of an input source.

Based on the technical solution of this application, when the battery supplies power, it is determined, in a current comparison and duration determining manner, that the current of the system is restored to the normal range, and the power supply manner of the input source may meet a system requirement. Therefore, the control circuit may control the battery to stop supplying power to the system 204, to avoid a waste of a battery electricity amount and reduce a quantity of battery cycles.

It should be understood that a person skilled in the art may make various modifications and variations to a specific circuit topology and control manner inside the chip without departing from the technical concept of this application. This application is also intended to include these modifications and variations.

How the control circuit 2014 switches the system power supply manner is described below with reference to embodiments.

### Embodiment 1

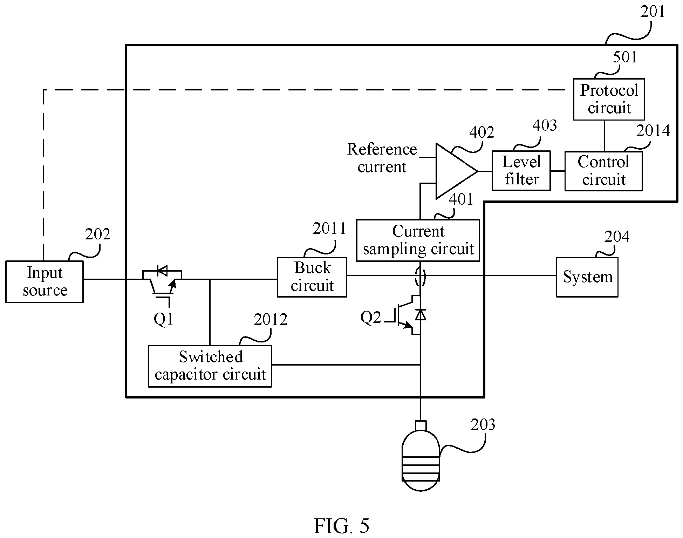

As shown in FIG. 5, the chip 201 further includes a protocol circuit 501, and the protocol circuit 501 is connected to the control circuit 2014.

The protocol circuit 501 is configured to: establish a communication connection to the input source 202 based on a preset charging protocol, and output a fast charging mode signal or a slow charging mode signal.

The control circuit 2014 is configured to: in response to the indication signal and the fast charging mode signal, stop responding to the level of the first comparator, turn on the first switch transistor Q1, switch off the second switch transistor Q2, control the switched capacitor circuit 2012 to reduce the voltage of the input source to a second voltage, and control the buck circuit 2011 to reduce the voltage of the input source to the target voltage.

For example, the voltage of the input source is 20 V, the conversion ratio of the buck circuit 2011 is 5:1, and the conversion ratio of the switched capacitor circuit 2012 is 4:1.

A terminal device is connected to a power adapter. After the power adapter performs handshake with the protocol circuit 501 based on the preset charging protocol, if the protocol circuit 501 identifies that the power adapter is a fast charging adapter, the protocol circuit 501 outputs the fast charging mode signal.

In a process of controlling the battery 203 to independently supply power to the system 204, after receiving the indication signal and the fast charging mode signal, the control circuit 2014 turns on the first switch transistor Q1, so that the input source 202 supplies power to the terminal device. Further, the control circuit 2014 controls the buck circuit 2011 to reduce the voltage of the input source to 4 V, to supply power to the system 204.

In addition, the control circuit 2014 turns off the second switch transistor Q2. In this way, the input source 202 may charge the battery 203 by using the switched capacitor circuit 2012. Because the conversion ratio of the switched capacitor circuit 2012 is 4:1, a charge voltage of the battery 203 is 5 V, and a fast charging effect is achieved.

### Embodiment 2

As shown in FIG. 5, the chip 201 further includes a protocol circuit 501, and the protocol circuit 501 is connected to the control circuit 2014.

The protocol circuit 501 is configured to: establish a communication connection to the input source 202 based on a preset charging protocol, and output a fast charging mode signal or a slow charging mode signal.

The control circuit 2014 is configured to: in response to the indication signal and the slow charging mode signal, stop responding to the level of the first comparator, turn on the first switch transistor Q1 and the second switch transistor Q2, and control the buck circuit 2011 to convert the voltage of the input source into the target voltage.

For example, the voltage of the input source is 20 V, the conversion ratio of the buck circuit 2011 is 5:1, and the conversion ratio of the switched capacitor circuit 2012 is 4:1.

A terminal device is connected to a power adapter. After the power adapter performs handshake with the protocol circuit 501 based on the preset charging protocol, if the protocol circuit 501 identifies that the power adapter is a slow charging adapter, the protocol circuit 501 outputs the slow charging mode signal.

In a process of controlling the battery 203 to independently supply power to the system 204, after receiving the indication signal and the slow charging mode signal, the control circuit 2014 turns on the first switch transistor Q1, so that the input source 202 supplies power to the terminal device. Further, the control circuit 2014 controls the buck circuit 2011 to reduce the voltage of the input source to 4 V, to supply power to the system 203.

In addition, the control circuit 2014 turns on the second switch transistor Q2. In this way, the second switch transistor Q2 short-circuits the switched capacitor circuit 2012, and a voltage obtained after the buck circuit 2011 performs reduction is used to charge the battery 203 via the second switch transistor Q2. Therefore, a charge voltage of the battery 203 is 4 V, and a slow charging effect is achieved.

Based on the technical solution of this application, when the input source can meet a system requirement, the control circuit controls the battery to stop supplying power to the system, and selects a corresponding charging path with reference to a mode signal output by the protocol circuit, to charge the battery by using the input source. In addition, the control circuit may further control the input source to independently load, to ensure continuity and economy of system power supply.

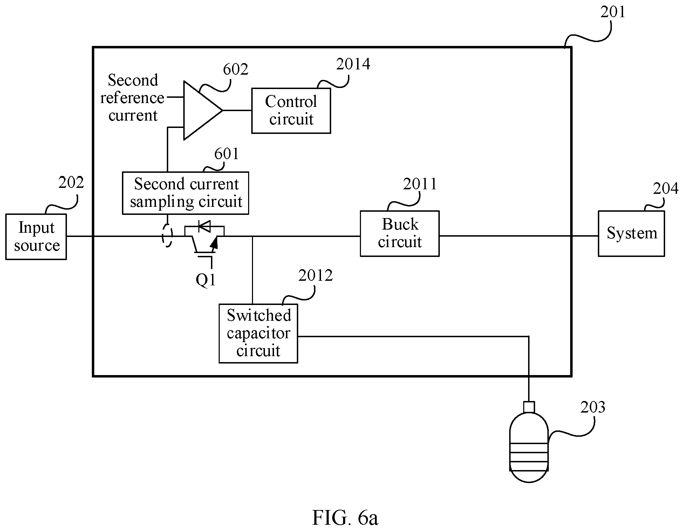

Based on a same technical concept, an embodiment of this application further provides a chip, used in a terminal device. As shown in FIG. 6a, the chip 201 includes a second current sampling circuit 601, a third comparator 602, a control circuit 2014, a switched capacitor circuit 2012, and a buck circuit 2011.

A first end of the switched capacitor circuit 2012 is configured to connect to an input source 202, a second end of the switched capacitor circuit 2012 is connected to a battery 203, a first end of the buck circuit 2011 is connected to the first end of the switched capacitor circuit 2012, and a second end of the buck circuit 2011 is connected to a system 204. A first end of the second current sampling circuit 601 is connected to the first end of the switched capacitor circuit 2012, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit.

The second current sampling circuit 601 is configured to collect a current of the input source.

The third comparator 602 is configured to output a level of the third comparator in response to a result of comparison between the current of the input source and the second reference current.

The control circuit 2014 is configured to: in response to the level of the third comparator, control the switched capacitor circuit 2012 to boost a discharge voltage of the battery 203 to a first voltage, and control the buck circuit 2011 to convert the first voltage into a target voltage, so that the battery supplies power to the system.

For example, when a user uses a mobile phone without connecting to a power supply, there is no input source input, and the battery independently supplies power to the system. Therefore, the control circuit 2014 may reuse a boost function of the switched capacitor circuit 2012 to boost the discharge voltage of the battery 203, to supply power to the system 204.

Based on the technical solution in this embodiment of this application, no additional power supply path needs to be set in the chip, and the control circuit can control voltage boosting and discharging of the battery by reusing the switched capacitor circuit in the chip, so that the battery at a low voltage supplies power to the system. In addition, chip space and hardware costs can further be reduced.

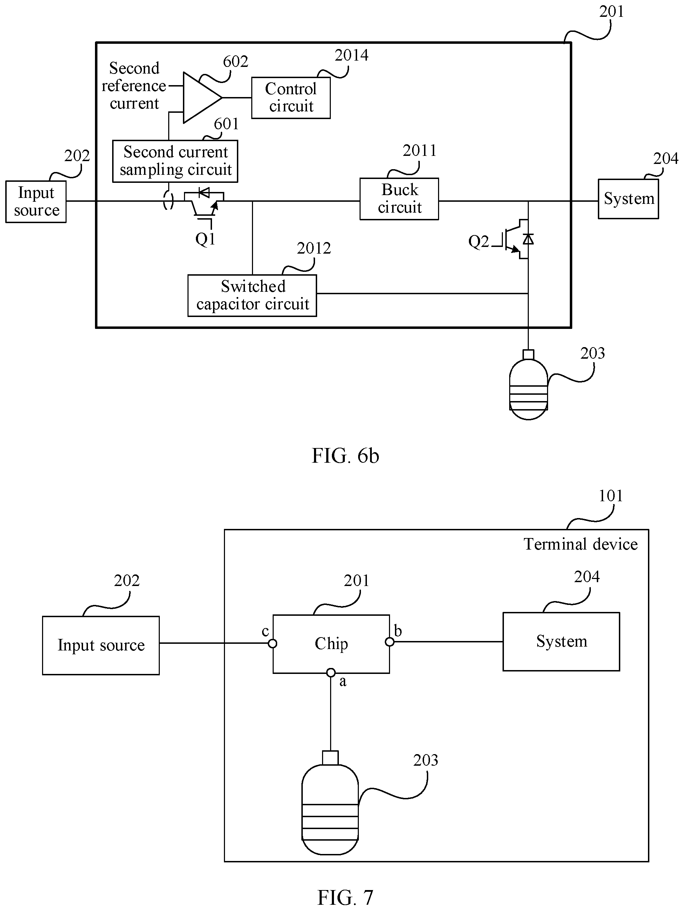

In a possible embodiment, as shown in FIG. 6b, the chip 201 further includes a second switch transistor Q2, the second switch transistor Q2 is connected between the second end of the buck circuit 2011 and the battery 203, and a control end of the second switch transistor Q2 is connected to the output end of the control circuit 2014.

The control circuit 2014 is further configured to switch off the second switch transistor Q2 in response to the level of the third comparator.

For example, when a user uses a mobile phone without connecting to a power supply, there is no input source input, and the battery independently supplies power to the system. Because the second switch transistor is generally configured in a slow charging path, if the second switch transistor is not switched off, the second switch transistor short-circuits the switched capacitor circuit, and the battery directly supplies power to the system at the discharge voltage.

Therefore, when there is no input source input, the control circuit in this embodiment of this application needs to switch off the second switch transistor, to control the switched capacitor circuit to boost the discharge voltage of the battery, to supply power to the system.

Based on a same technical concept, an embodiment of this application further provides a terminal device. As shown in FIG. 7, the terminal device 101 includes a battery 203, a system 204, and any chip 201 described above. A battery interface a of the chip 201 is configured to connect to the battery, a power supply interface b of the chip 201 is configured to connect to the system, and a serial communication USB interface c of the chip 201 is configured to connect to an input source 202.

Based on a same technical concept, an embodiment of this application further provides a system power supply method, applied to a chip. The chip includes a first switch transistor, a first comparator, a voltage sampling circuit, a control circuit, a switched capacitor circuit, and a buck circuit.

A first end of the first switch transistor is configured to connect to an input source. A first end of the switched capacitor circuit is connected to a second end of the first switch transistor, a second end of the switched capacitor circuit is connected to a battery, a first end of the buck circuit is connected to the second end of the first switch transistor, and a second end of the buck circuit is connected to a system. A first end of the voltage sampling circuit is connected to the system, a second end of the voltage sampling circuit is connected to a first input end of the first comparator, a second input end of the first comparator is configured to input to a reference voltage, an output end of the first comparator is connected to the control circuit, and an output end of the control circuit is separately connected to a control end of the first switch transistor, a control end of the switched capacitor circuit, and a control end of the buck circuit.

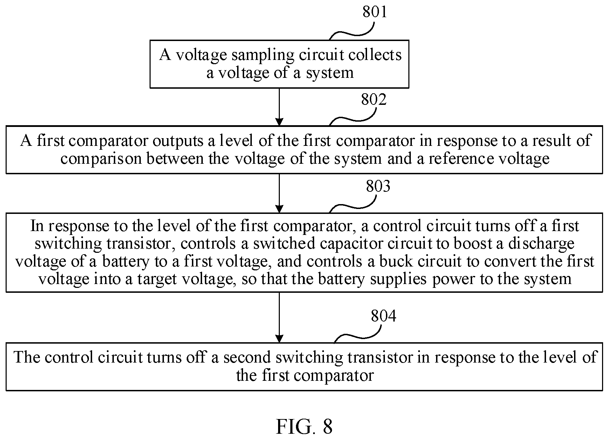

As shown in FIG. 8, the method includes the following steps.

Step 801: The voltage sampling circuit collects a voltage of the system.

Step 802: The first comparator outputs a level of the first comparator in response to a result of comparison between the voltage of the system and the reference voltage.

Step 803: In response to the level of the first comparator, the control circuit turns off the first switch transistor, controls the switched capacitor circuit to boost a discharge voltage of the battery to a first voltage, and controls the buck circuit to convert the first voltage into a target voltage, so that the battery supplies power to the system.

It should be noted that, in a conventional system power supply method, when a loading capability of an input source is insufficient, an additional power supply path is generally set, to switch a state of independent loading of the input source to a state of joint loading of the input source and a battery. In the technical solution of this application, when a loading capability of the input source is insufficient, a boost function of the switched capacitor circuit is reused to boost the discharge voltage of the battery, so that a state of independent loading of the input source is switched to a state of independent loading of the battery.

Based on the technical solution of this application, the control circuit can control voltage boosting and discharging of the battery by reusing the switched capacitor circuit in the chip, so that the battery at a low voltage supplies power to the system. Compared with the conventional power supply solution, in this application, no additional power supply path needs to be set in the chip, so that chip space and hardware costs are reduced.

In a possible embodiment, the chip further includes a second switch transistor, the second switch transistor is connected between the second end of the buck circuit and the battery, and a control end of the second switch transistor is connected to the output end of the control circuit.

As shown in FIG. 8, the method further includes the following step.

Step 804: The control circuit turns off the second switch transistor in response to the level of the first comparator.

It may be understood that, in a slow charging mode, the control circuit controls the buck circuit to reduce a voltage of the input source, and outputs a reduced voltage of the input source to the system. In addition, because the second switch transistor is in an on state, the control circuit further outputs the reduced voltage of the input source to the battery to charge the battery.

In this case, if the loading capability of the input source is insufficient, the control circuit is triggered to switch the state of independent loading of the input source to the state of independent loading of the battery, and the second switch transistor should be switched off; otherwise, the second switch transistor short-circuits the switched capacitor circuit, and the battery directly supplies power to the system at the discharge voltage.

In a process in which the battery supplies power to the system, load of the system may be gradually restored to a normal level. As a result, in this case, continuing to use the battery to supply power to the system causes a waste of an electricity amount. The control circuit may switch to a state in which the input source supplies power to the system. In this way, a power supply requirement of the system is met, thereby saving a battery electricity amount and reducing a quantity of cycles.

Based on a technical concept of switching a system power supply manner, the chip further includes a first current sampling circuit, a second comparator, and a high-high level filter.

An input end of the first current sampling circuit is connected to the system, an output end of the first current sampling circuit is connected to a first input end of the second comparator, a second input end of the second comparator is configured to input to a first reference current, and an output end of the second comparator is connected to the control circuit.

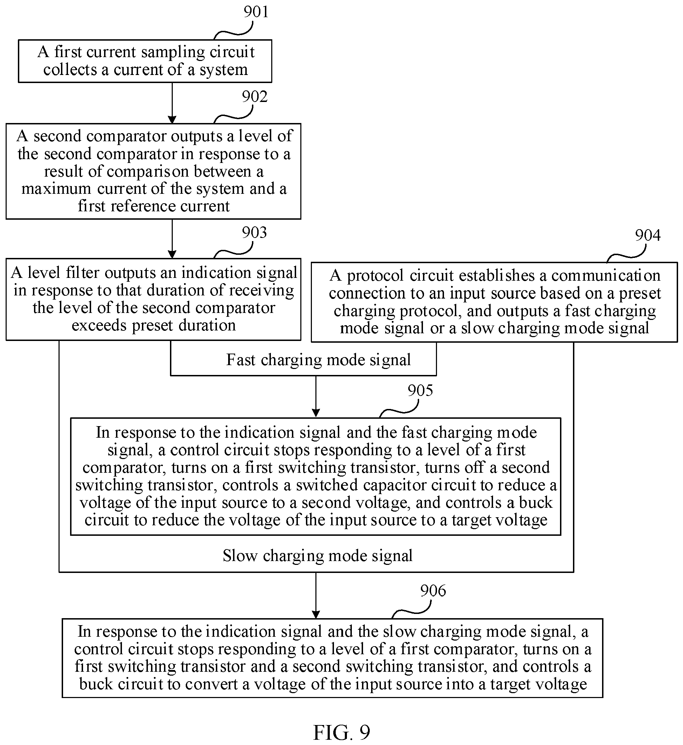

As shown in FIG. 9, the control circuit switches the system power supply manner by using the following method. Step 901: The first current sampling circuit collects a current of the system.

Step 902: The second comparator outputs a level of the second comparator in response to a result of comparison between a maximum current of the system and the first reference current.

Step 903: The high level filter outputs an indication signal in response to that duration of receiving the level of the second comparator exceeds preset duration.

It should be noted that the indication signal indicates that the current of the system is within a preset range.

Based on the technical solution of this application, when the battery supplies power, it is determined, in a current comparison and duration determining manner, that the current of the system is restored to a normal range. Further, if the current of the system is within the normal range, it indicates that the input source may be used to supply power to the system. Therefore, the control circuit may control the battery to stop supplying power to the system, and control the input source to independently load, to avoid a waste of a battery electricity amount and reduce a quantity of battery cycles.

In a possible embodiment, the chip further includes a protocol circuit, and the protocol circuit is connected to the control circuit.

As shown in FIG. 9, the method further includes the following steps.

Step 904: The protocol circuit establishes a communication connection to the input source based on a preset charging protocol, and outputs a fast charging mode signal or a slow charging mode signal.

After step 903 and step 904, step 905 or step 906 is performed.

Step 905: In response to the indication signal and the fast charging mode signal, the control circuit stops responding to the level of the first comparator, turns on the first switch transistor, turns off the second switch transistor, controls the switched capacitor circuit to reduce the voltage of the input source to a second voltage, and controls the buck circuit to reduce the voltage of the input source to the target voltage.

Step 906: In response to the indication signal and the slow charging mode signal, the control circuit stops responding to the level of the first comparator, turns on the first switch transistor and the second switch transistor, and controls the buck circuit to convert the voltage of the input source into the target voltage.

For example, the input source supplies power to a terminal device via a power adapter, and the protocol circuit performs handshake with the power adapter based on the preset charging protocol, and selects a corresponding charging mode.

For example, if the power adapter is of a fast charging type, based on the fast charging mode signal and the indication signal, the control circuit controls the buck circuit to reduce an input voltage of the input source and then supply power to the system, and controls the switched capacitor circuit to reduce the input voltage of the input source and then supply power to the battery.

If the power adapter is of a slow charging type, the control circuit controls, based on the slow charging mode signal and the indication signal, the buck circuit to reduce an input voltage of the input source and then supply power to the system and the battery.

Based on the technical solution of this application, when the current of the system is within the normal range, the control circuit controls the battery to stop supplying power to the system, and selects a corresponding charging path with reference to a mode signal output by the protocol circuit, to charge the battery by using the input source. In addition, the control circuit may control the input source to independently load, to ensure continuity and economy of system power supply.

Based on a same technical concept, an embodiment of this application further provides a system power supply method, applied to a chip. The chip includes a second current sampling circuit, a third comparator, a control circuit, a switched capacitor circuit, and a buck circuit.

A first end of the switched capacitor circuit is configured to connect to an input source, a second end of the switched capacitor circuit is connected to a battery, a first end of the buck circuit is connected to the first end of the switched capacitor circuit, and a second end of the buck circuit is connected to a system. A first end of the second current sampling circuit is connected to the first end of the switched capacitor circuit, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit.

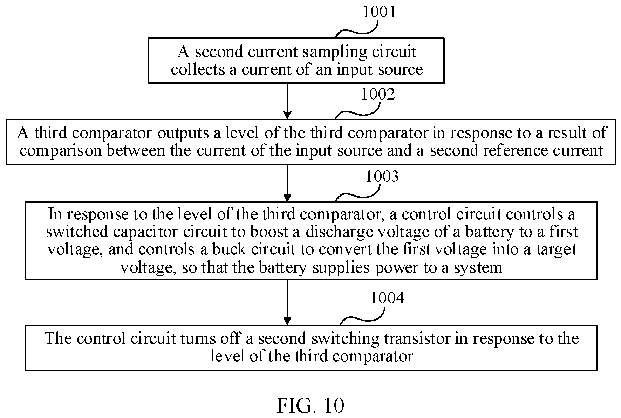

As shown in FIG. 10, the method includes the following steps.

Step 1001: The second current sampling circuit collects a current of the input source.

Step 1002: The third comparator outputs a level of the third comparator in response to a result of comparison between the current of the input source and the second reference current.

Step 1003: In response to the level of the third comparator, the control circuit controls the switched capacitor circuit to boost a discharge voltage of the battery to a first voltage, and controls the buck circuit to convert the first voltage into a target voltage, so that the battery supplies power to the system.

For example, when a user uses a mobile phone without connecting to a power supply, there is no input source input, and the battery independently supplies power to the system. Therefore, the control circuit may reuse a boost function of the switched capacitor circuit to boost the voltage of the battery, to supply power to the system.

Based on the technical solution of this application, no additional power supply path needs to be set in the chip, and the control circuit can control voltage boosting and discharging of the battery by reusing the switched capacitor circuit in the chip, so that the battery at a low voltage supplies power to the system. In addition, chip space and hardware costs can further be reduced.

In a possible embodiment, the chip further includes a second switch transistor, the second switch transistor is connected between the second end of the buck circuit and the battery, and a control end of the second switch transistor is connected to the output end of the control circuit.

Step 1004: The control circuit turns off the second switch transistor in response to the level of the third comparator.

It may be understood that, when there is no input source input, the battery should be controlled to independently supply power to the system. Because the second switch transistor is generally configured in a slow charging path, if the second switch transistor is not switched off, the second switch transistor short-circuits the switched capacitor circuit, and the battery directly supplies power to the system at the discharge voltage.

Therefore, when there is no input source input, the control circuit in this application needs to switch off the second switch transistor, to control the switched capacitor circuit to boost the discharge voltage of the battery, to supply power to the system.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

It is clear that a person skilled in the art can make various modifications and variations to this application without departing from the scope of this application. In this way, this application is intended to cover these modifications and variations of this application provided that they fall within the scope of protection of the claims of this application and their equivalent technologies.

## Claims

1. A chip, wherein the chip comprises a first switch transistor, a first comparator, a voltage sampling circuit, a control circuit, a switched capacitor circuit, and a buck circuit;
a first end of the first switch transistor is configured to connect to an input source; a first end of the switched capacitor circuit is connected to a second end of the first switch transistor, a second end of the switched capacitor circuit is connected to a battery, a first end of the buck circuit is connected to the second end of the first switch transistor, and a second end of the buck circuit is connected to a system; a first end of the voltage sampling circuit is connected to the system, a second end of the voltage sampling circuit is connected to a first input end of the first comparator, a second input end of the first comparator is configured to connect to a reference voltage, an output end of the first comparator is connected to the control circuit, and an output end of the control circuit is separately connected to a control end of the first switch transistor, a control end of the switched capacitor circuit, and a control end of the buck circuit;
the voltage sampling circuit is configured to collect a voltage of the system;
the first comparator is configured to output a level of the first comparator in response to a result of comparison between the voltage of the system and the reference voltage; and
the control circuit is configured to: in response to the level of the first comparator, switch off the first switch transistor, control the switched capacitor circuit to boost a discharge voltage of the battery to a first voltage, and control the buck circuit to convert the first voltage into a target voltage, so that the battery supplies power to the system.

2. The chip according to claim 1, wherein the chip further comprises a second switch transistor, the second switch transistor is connected between the second end of the buck circuit and the battery, and a control end of the second switch transistor is connected to the output end of the control circuit; and
the control circuit is further configured to switch off the second switch transistor in response to the level of the first comparator.

3. The chip according to claim 2, wherein the chip further comprises a first current sampling circuit, a second comparator, and a high-high level filter;
an input end of the first current sampling circuit is connected to the system, an output end of the first current sampling circuit is connected to a first input end of the second comparator, a second input end of the second comparator is configured to input to a first reference current, and an output end of the second comparator is connected to the control circuit;
the first current sampling circuit is configured to collect a current of the system;
the second comparator is configured to output a level of the second comparator in response to a result of comparison between the current of the system and the first reference current; and
the high level filter is configured to output an indication signal in response to that duration of receiving the level of the second comparator exceeds preset duration, wherein the indication signal indicates that the current of the system is within a preset range.

4. The chip according to claim 3, wherein the chip further comprises a protocol circuit, and the protocol circuit is connected to the control circuit;
the protocol circuit is configured to: establish a communication connection to the input source based on a preset charging protocol, and output a fast charging mode signal or a slow charging mode signal; and
the control circuit is configured to: in response to the indication signal and the fast charging mode signal, stop responding to the level of the first comparator, turn on the first switch transistor, switch off the second switch transistor, control the switched capacitor circuit to reduce a voltage of the input source to a second voltage, and control the buck circuit to reduce the voltage of the input source to the target voltage; or
in response to the indication signal and the slow charging mode signal, stop responding to the level of the first comparator, turn on the first switch transistor and the second switch transistor, and control the buck circuit to convert a voltage of the input source into the target voltage.

5. A chip, wherein the chip comprises a second current sampling circuit, a third comparator, a control circuit, a switched capacitor circuit, and a buck circuit;
a first end of the switched capacitor circuit is configured to connect to an input source, a second end of the switched capacitor circuit is connected to a battery, a first end of the buck circuit is connected to the first end of the switched capacitor circuit, and a second end of the buck circuit is connected to a system; a first end of the second current sampling circuit is connected to the first end of the switched capacitor circuit, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit;
the second current sampling circuit is configured to collect a current of the input source;
the third comparator is configured to output a level of the third comparator in response to a result of comparison between the current of the input source and the second reference current; and
the control circuit is configured to: in response to the level of the third comparator, control the switched capacitor circuit to boost a discharge voltage of the battery to a first voltage, and control the buck circuit to convert the first voltage into a target voltage, so that the battery supplies power to the system.

6. The chip according to claim 5, wherein the chip further comprises a second switch transistor, the second switch transistor is connected between the second end of the buck circuit and the battery, and a control end of the second switch transistor is connected to the output end of the control circuit; and
the control circuit is further configured to switch off the second switch transistor in response to the level of the third comparator

7. A terminal device, wherein the terminal device comprises a battery, a system, and the chip according to any one of claims 1 to 6, a battery interface of the chip is configured to connect to the battery, a power supply interface of the chip is configured to connect to the system, and a serial communication USB interface of the chip is configured to connect to an input source.

8. A system power supply method, applied to a chip, wherein the chip comprises a first switch transistor, a first comparator, a voltage sampling circuit, a control circuit, a switched capacitor circuit, and a buck circuit;
a first end of the first switch transistor is configured to connect to an input source; a first end of the switched capacitor circuit is connected to a second end of the first switch transistor, a second end of the switched capacitor circuit is connected to a battery, a first end of the buck circuit is connected to the second end of the first switch transistor, and a second end of the buck circuit is connected to a system; a first end of the voltage sampling circuit is connected to the system, a second end of the voltage sampling circuit is connected to a first input end of the first comparator, a second input end of the first comparator is configured to input to a reference voltage, an output end of the first comparator is connected to the control circuit, and an output end of the control circuit is separately connected to a control end of the first switch transistor, a control end of the switched capacitor circuit, and a control end of the buck circuit; and
the method comprises:
collecting, by the voltage sampling circuit, a voltage of the system;
outputting, by the first comparator, a level of the first comparator in response to a result of comparison between the voltage of the system and the reference voltage; and
switching off, by the control circuit, the first switch transistor, controlling the switched capacitor circuit to boost a discharge voltage of the battery to a first voltage, and controlling the buck circuit to convert the first voltage into a target voltage, in response to the level of the first comparator, so that the battery supplies power to the system.

9. The method according to claim 8, wherein the chip further comprises a second switch transistor, the second switch transistor is connected between the second end of the buck circuit and the battery, and a control end of the second switch transistor is connected to the output end of the control circuit; and
the method further comprises:
switching off, by the control circuit, the second switch transistor in response to the level of the first comparator.

10. The method according to claim 9, wherein the chip further comprises a first current sampling circuit, a second comparator, and a high-high level filter;
an input end of the first current sampling circuit is connected to the system, an output end of the first current sampling circuit is connected to a first input end of the second comparator, a second input end of the second comparator is configured to input to a first reference current, and an output end of the second comparator is connected to the control circuit; and
after the switching off, by the control circuit, the first switch transistor, controlling the switched capacitor circuit to boost a discharge voltage of the battery to a first voltage, and controlling the buck circuit to convert the first voltage into a target voltage, in response to the level of the first comparator, so that the battery supplies power to the system, the method further comprises:
collecting, by the first current sampling circuit, a current of the system;
outputting, by the second comparator, a level of the second comparator in response to a result of comparison between the current of the system and the first reference current; and
outputting, by the high level filter, an indication signal in response to that duration of receiving the level of the second comparator exceeds preset duration, wherein the indication signal indicates that the current of the system is within a preset range.

11. The method according to claim 10, wherein the chip further comprises a protocol circuit, and the protocol circuit is connected to the control circuit; and
the method further comprises:
establishing, by the protocol circuit, a communication connection to the input source based on a preset charging protocol, and outputting a fast charging mode signal or a slow charging mode signal; and
after the outputting, by the high level filter, an indication signal in response to that duration of receiving the level of the second comparator exceeds preset duration, the method further comprises:
in response to the indication signal and the fast charging mode signal, stopping, by the control circuit, responding to the level of the first comparator, turning on the first switch transistor, switching off the second switch transistor, controlling the switched capacitor circuit to reduce a voltage of the input source to a second voltage, and controlling the buck circuit to reduce the voltage of the input source to the target voltage; or
in response to the indication signal and the slow charging mode signal, stopping responding to the level of the first comparator, turning on the first switch transistor and the second switch transistor, and controlling the buck circuit to convert a voltage of the input source into the target voltage.

12. A system power supply method, applied to a chip, wherein the chip comprises a second current sampling circuit, a third comparator, a control circuit, a switched capacitor circuit, and a buck circuit;
a first end of the switched capacitor circuit is configured to connect to an input source, a second end of the switched capacitor circuit is connected to a battery, a first end of the buck circuit is connected to the first end of the switched capacitor circuit, and a second end of the buck circuit is connected to a system; a first end of the second current sampling circuit is connected to the first end of the switched capacitor circuit, an output end of the second current sampling circuit is connected to a first input end of the third comparator, a second input end of the third comparator is configured to connect to a second reference current, an output end of the third comparator is connected to an input end of the control circuit, and an output end of the control circuit is separately connected to a control end of the switched capacitor circuit and a control end of the buck circuit; and
the method comprises:
collecting, by the second current sampling circuit, a current of the input source;
outputting, by the third comparator, a level of the third comparator in response to a result of comparison between the current of the input source and the second reference current; and
in response to the level of the third comparator, controlling, by the control circuit, the switched capacitor circuit to boost a discharge voltage of the battery to a first voltage, and controlling the buck circuit to convert the first voltage into a target voltage, so that the battery supplies power to the system.

13. The method according to claim 12, wherein the chip further comprises a second switch transistor, the second switch transistor is connected between the second end of the buck circuit and the battery, and a control end of the second switch transistor is connected to the output end of the control circuit; and
the control circuit turns off the second switch transistor in response to the level of the third comparator.
